# NEW EUROPEAN PATENT SPECIFICATION

(11) **EP 0 273 892 B2**
(45) Date of publication and mention of the opposition decision: **11.08.1999**
(45) Mention of the grant of the patent: 12.05.1993
(21) Application number: 87850385.3
(22) Date of filing: 11.12.1987
(51) Int. Cl.: B01D 39/08

(54) **Sludge Filter**
Schlammfilter
Filtre à boue

(30) Priority: 12.12.1986 SE 8605361
(43) Date of publication of application: 06.07.1988
(73) Proprietor: Scandiafelt IT AB, 640 10 Högsjö (SE)
(72) Inventor: Almhem, Rolf, S-640 10 Högsjö (SE)
(74) Representative: Billberg, Hans

(56) References cited:
- EP-A- 0 009 141
- EP-A- 0 044 053
- EP-A- 0 077 901
- EP-A- 0 161 579
- EP-A- 0 171 891
- CH-A- 608 975
- DE-A- 2 419 751
- DE-A- 2 531 222
- DE-A- 3 614 949
- DE-C- 321 814
- US-A- 4 070 519
- US-A- 4 142 557
- US-A- 4 610 916
- US-A- 4 621 663
- AUFBEREITUNGSTECHNIK, no. 2, 1973, pages 93-103; M. KAPITANY: "Siebbeläge aus Draht und ihr Einsatz auf Vibrationssiebmaschinen"
- Prospekt der Einsprechenden "Planet" vom August 1984
- Smith, Polyetheretherketone (PEEK), SWISS PLASTICS J (1981) Nr. 4, Seiten 37 bis 44
- Prospekt "Gore-Tex PTFE-Fasern" 1986

## Description

This invention relates to a woven filter medium for sludge dewatering consisting of longitudinal and transversal threads of monofilament of plastic in two layers, whereby the cross section shape of the longitudinal threads is flattened, and whereby the longitudinal threads bind with the transversal threads according to any pattern to form a fabric.

Filtration of sludge containing liquids requires a high standard of the used filter medium. It shall have an adequate permeability, a surface and a system of pores giving quick formation of cake and a surface which renders release of cakes possible without the material being adhered to the filter. The filter must have a certain mechanical stability and chemical resistance. Woven structures of synthetic yarns and filament are used to an increasing extent. The use of solid-drawn, circular threads of a thermoplastic resin (circular monofilament) are normally used when weaving a filter media for sludge filtration. The degree of free area and the smothness of the surface can be graded by choice of the thread count and thickness of the filament. The possibilities to vary this are, however, not so many as desirable when using only circular filaments. These have among other things the tendency to be enbedded so completely by the filter cake that the disengagement of it will be difficult and the material will adhere to the filter. However CH-608 975 discloses that the warp threads are flattened in contrary to circular threads. However, these circular warp threads do not form the surface of the fabric and will therefore not facilitate the disengagement of the filter cake. Further, this fabric is of metal threads. A metal thread fabric cannot be woven so that the warp threads pass over more than one weft thread which means that there is no floating for the warp threads.

DE-A-2 531 222 also discloses flattened threads but the design of the fabric is not so that the disengagement will be facilitated.

It is an object of the invention to eliminate this drawback and facilitate the formation of the cakes.

The invention is hereby characterized in that the longitudinal threads are located to form surfaces along parts in their longitudinal direction, said surfaces being dominantly extended in the plane of the fabric, and that the first layer of the transversal threads are of spun yarns or multifilaments and the transversal threads of the second layer are circular monofilaments of plastic, whereby the pattern is chosen such that said surfaces of the flattened threads to the largest extent are exposed on the side of the first layer on which a cake is to be formed

Because of the flattened cross section of the longitudinal threads, the degree of free area of the filter is easier to grade, since the open space in a woven fabric consisting of flat threads are smaller than when the woven fabric consists of circular threads. The formation of cakes will also be formed faster, because the solid sludge particles will adhere to a flat surface easier than on a round surface because of the geometry and the way of flow. As mentioned above, the release of cakes will be easier as flat threads will not be enbedded by the cake and for the same reason the filter will remain cleaner after the release of cakes.

The embodiments of the invention will be described in the following with reference to the enclosed drawing.

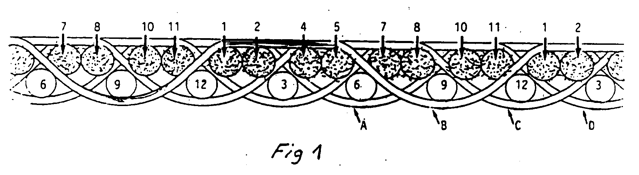

Fig. 1 is a transversal section of a double layer woven fabric according to the invention.

Fig. 1 shows a double layer woven fabric and the longitudinal threads A, B, C and D are flat filaments. The transversal threads 1, 2, 4, 5, 7, 8, 10 and 11 are soft yarns or multifilament.

The remaining transversal threads 3, 6, 9 and 12 are circular monofilament. Thus, a smaller degree of free area is achieved by adding softer multifilament or spun yarns to the filaments. Over the reduction of the degree of free area, the soft threads will fill up the space between the filament in the filter surface if they are taken up,and will hereby contribute to a better and a cleaner release of cakes.

For a woven fabric having longitudinal flattened filament and transversal circular filaments with soft filler yarns in both directions, the weaving pattern may be chosen so that the flattened threads and the filler yarns to the largest extent are exposed on the side of the filter on which the filter cake shall be formed.

## Claims

1. Woven filter medium for sludge dewatering consisting of longitudinal and transversal threads of monofilament of plastic in two layers, whereby the cross section shape of the longitudinal threads is flattened, and whereby the longitudinal threads bind with the transversal threads according to any pattern to form a fabric which is **characterized in** that the longitudinal threads are located to form surfaces along parts in their longitudinal direction, said surfaces being dominantly extended in the plane of the fabric, and that the first layer of the transversal threads are of spun yarns or multi filaments and the transversal threads of the second layer are circular monofilaments of plastic, whereby the pattern is chosen such that said surfaces of the flattened threads to the largest extent are exposed on the side of the first layer on which a cake is to be formed.

2. Filter medium according to claim 1, **characterized in** that the cross section of the longitudinal threads has a horizontal rectangular shape.

3. Filter medium according to claim 1, **characterized in** that the cross section of the longitudinal threads has a horizontal oval shape.

4. Filter medium according to any of claims 1, 2 and 3, **characterized in** that the threads are of thermoplastic material.

5. Filter medium according to claim 4, **characterized in** that the longitudinal threads or the transversal threads are of any kind of polyester plastic.

6. Filter medium according to claim 4, **characterized in** that the longitudinal threads of the transversal threads are of any kind of polyamide plastic.

7. Filter medium according to claim 4, **characterized in** that the longitudinal threads or the transversal threads are of tetrafluorpolyethene plastic.

8. Filter medium according to claim 4, **characterized in** that the longitudinal threads or the transversal threads are of any kind of polyetherketone plastic.

9. Filter medium according to claim 4, **characterized in** that the longitudinal threads of the transversal threads are of any kind of polyphenylensulphide plastic.

10. Filter medium according to claim 4, **characterized in** that the longitudinal threads or the transversal threads are of any kind of polypropene plastic.

## Patentansprüche

1. Gewobenes Filtermedium zur Schlammentwässerung bestehend aus longitudinalen und transversalen Fäden von Plastikmonofil in zwei Lagen, wobei die Querschnittsform der longitudinalen Fäden abgeflacht ist und wobei die longitudinalen Fäden mit den transversalen Fäden nach einem beliebigen Muster zur Bildung eines Gewebes verbunden sind dadurch gekennzeichnet, daß die longitudinalen Fäden so angeordnet sind, daß sie in Teilen eine Oberfläche entlang ihrer Längsrichtung bilden, wobei die Oberflächen im wesentlichen in der Ebene des Gewebes ausgedehnt sind, und daß die erste Schicht der transversalen Fäden aus Spinngarn oder Vielfaden-Garn ist und die transversalen Fäden der zweiten Schicht zirkulare Plastilanonofils sind, wodurch das Muster so gewählt ist, daß die Oberflächen der abgeflachten Fäden zum größten Teil an der Seite der ersten Schicht liegen, auf welcher ein Kuchen gebildet wird.

2. Filtermedium nach Anspruch 1, dadurch gekennzeichnet, daß der Querschnitt der longitudinalen Fäden eine horizontal-rechtwinklige Form hat.

3. Filtermedium nach Anspruch 1, dadurch gekennzeichnet, daß der Querschnitt der longitudinalen Fäden eine horizontal-ovale Form hat.

4. Filtermedium nach einem der Ansprüche 1, 2 und 3, dadurch gekennzeichnet, daß die Fäden aus thermoplastischem Material bestehen.

5. Filtermedium nach Anspruch 4, dadurch gekennzeichnet, daß die longitudinalen Fäden oder die transversalen Fäden aus einer Art Polyesterplastik bestehen.

6. Filtermedium nach Anspruch 4, dadurch gekennzeichnet, daß die longitudinalen Fäden oder die transversalen Fäden aus jeglicher Art Polyamidplastik bestehen.

7. Filtermedium nach Anspruch 4, dadurch gekennzeichnet, daß die longitudinalen Fäden oder die transversalen Fäden aus Tetrafluorpolyethenplastik bestehen.

8. Filtermedium nach Anspruch 4, dadurch gekennzeichnet, daß die longitudinalen Fäden oder die transversalen Fäden aus jeglicher Art Polyetherketon-Plastik bestehen.

9. Filtermedium nach Anspruch 4, dadurch gekennzeichnet, daß die longitudinalen Fäden oder die transversalen Fäden aus jeglicher Art Polyphenylensulphid-Plastik bestehen.

10. Filtermedium nach Anspruch 4, dadurch gekennzeichnet, daß die longitudinalen Fäden oder die transversalen Fäden aus jeglicher Art Polypropen-Plastik bestehen.

## Revendications

1. Toile filtrante tissée pour assèchement de boues constituée de fils longitudinaux et transversaux en monofilament de matière plastique, en deux couches, dans laquelle la section transversale des fils longitudinaux est aplatie, et dans laquelle les fils longitudinaux sont liés aux fils transversaux conformément à toute configuration engendrant une toile, caractérisée en ce que les fils longitudinaux sont disposés de manière à présenter des surfaces le long de parties de leur étendue longitudinale, lesdites surfaces étant principalement situées dans le plan de la toile, et en ce que la première couche de fils transversaux des fils filés ou des multifilaments et les fils transversaux de la seconde couche sont des monofilaments circulaires de plastique, moyennant quoi le motif est choisi pour que lesdites surfaces des fils aplatis apparaissent principalement du côté de la première couche sur laquelle un gâteau doit être formé.

2. Toile filtrante suivant la revendication 1, caractérisée en ce que la section transversale des fils longitudinaux est de forme rectangulaire horizontale.

3. Toile filtrante suivant la revendication 1, caractérisée en ce que la section transversale des fils longitudinaux est de forme ovale horizontale.

4. Toile filtrante suivant l'une quelconque des revendications 1, 2 et 3, caractérisée en ce que les fils sont en une matière thermoplastique.

5. Toile filtrante suivant la revendication 4, caractérisée en ce que les fils longitudinaux ou les fils transversaux sont d'un type quelconque de polyester.

6. Toile filtrante suivant la revendication 4, caractérisé en ce que les fils longitudinaux ou les fils transversaux sont d'un type quelconque de polyamide.

7. Toile filtrante suivant la revendication 4, caractérisée en ce que les fils longitudinaux ou les fils transversaux sont en polytétrafluoroéthylène.

8. Toile filtrante suivant la revendication 4, caractérisée en ce que les fils longitudinaux ou les fils transversaux sont d'un type quelconque de polyéthercétone.

9. Toile filtrante suivant la revendication 4, caractérisée en ce que les fils longitudinaux ou les fils transversaux sont d'un type quelconque de sulfure de polyphénylène.

10. Toile filtrante suivant la revendication 4, caractérisée en ce que les fils longitudinaux ou les fils transversaux sont d'un type quelconque de polypropylène.
